# EUROPEAN PATENT SPECIFICATION

(11) **EP 2 848 293 B1**
(45) Date of publication and mention of the grant of the patent: **01.11.2017**
(21) Application number: 13184749.3
(22) Date of filing: 17.09.2013
(51) Int. Cl.: B01D 35/02, B01D 35/153, B01D 27/10, B01D 29/33

(54) **Filter module**
Filtermodul
Module de filtre

(43) Date of publication of application: 18.03.2015
(73) Proprietor: Siemens Aktiengesellschaft, 80333 München (DE)
(72) Inventor: Soerensen, Carsten Moeller, 7260 Sdr. Omme (DK); Berg, Mark, 8000 Århus C (DK); Jakobsztat, Jakob, 5000 Odense C (DK); Lauridsen, Joergen Boje, 7620 Lemvig (DK)

(56) References cited:
- EP-A1- 1 748 234
- DE-A1- 10 101 828
- DE-C- 910 645
- US-A- 5 490 929
- US-A- 5 662 791
- US-A1- 2008 290 017
- US-A1- 2010 143 126

## Description

The invention describes a filter module for insertion into a cooling fluid path of a cooling arrangement; a wind turbine with a cooling arrangement to accommodate such a filter module; a method of performing a flushing procedure on the cooling arrangement of a wind turbine; and a method of performing a flushing procedure on the cooling arrangements of a plurality of wind turbines.

A large electrical machine such as a generator is usually also equipped with some kind of cooling arrangement, since very high temperatures can be reached during operation of the generator, and the machine itself as well as other components must be protected from heat damage. Particularly in the case of a large generator such as a wind turbine, the rotor and stator should also be cooled in order to avoid a drop in efficiency caused by overheating of the magnet poles. In some approaches, a cooling fluid is pumped through hoses, pipes or conduits of a cooling circuit of a generator or converter, and the cooling circuit is generally located inside a nacelle or canopy of the wind turbine.

Dirt particles or debris may be carried by the cooling fluid as this travels through the cooling circuit. Such dirt and debris may collect in components such as a converter, a cooler, a pump, valves, bleed nipples, excess pressure valves, etc, and may cause damage, thus adding to the maintenance cost of a wind turbine.

Therefore, cooling systems or subsystems are generally subject to a flushing procedure before going operational. Particularly in the case of a cooling system that must be assembled at a remote site, for example an offshore wind turbine, such a flushing procedure can add considerably to the overall cost and complexity of the system.

Alternatively, a cooling arrangement of a wind turbine may be equipped with a filter in the path of the cooling fluid. There are various ways of incorporating a filter into a fluid supply line. For example, US 2008/0290017 describes a connecting element used to permanently join two pipes, and a filter element that can be inserted into the connecting element so that it protrudes into the fluid flow. The filter element has a tank for collecting dirt and debris, and the filter element can be lifted out of the connecting element whenever it needs cleaning. In a similar fashion, EP 1 748 234 A1 describes a valve body for permanent installation in a hydraulic system. Here also, a filter extends into the fluid flow, and the filter can be removed from the valve body in order to be cleaned. In such solutions, the filters remain in the fluid flow and are only removed for cleaning. However, since it is important to maintain a favourably high flow rate in the cooling circuit, the filter must be relatively coarse, i.e. with large openings, so that the cooling fluid can easily pass through without significant pressure loss. However, the large openings mean that only large dirt particles can be separated out of the cooling fluid. Smaller particles are not trapped and can still cause damage.

It is therefore an object of the invention to provide an improved way of removing dirt particles from a cooling fluid of a wind turbine cooling system.

This object is achieved by the filter module of claim 1; by the method of claim 8 of performing a flushing procedure on the cooling arrangement of a wind turbine; and by the method of claim 12 of performing a flushing procedure on the cooling arrangements of a plurality of wind turbines.

According to the invention, the filter module is mainly realised for temporary insertion into a cooling fluid path of a cooling arrangement of a wind turbine during a flushing procedure of the cooling arrangement, and comprises an inlet connector for detachably connecting to an upstream part of the cooling arrangement and an outlet connector for detachably connecting to a downstream part of the cooling arrangement; a non-return valve realised to define a fluid flow direction from an upstream end of the filter module to a downstream end of the filter module; and an outer housing formed to receive a filter mesh insert, which filter mesh insert has an essentially conical form and comprises a plurality of mesh openings realised to separate particles from the cooling fluid), and wherein the base of the filter mesh insert is arranged at the downstream end of the filter module and the apex of the filter mesh insert is arranged towards the upstream end of the filter module.

An advantage of the filter module according to the invention is that it can conveniently be inserted into the path of the cooling fluid of the cooling arrangement for the purposes of filtering the cooling fluid, and it can then be removed again once the fluid is sufficiently clean.

A wind turbine can comprise a cooling arrangement with a cooling fluid path. An interruption means for interrupting the cooling fluid path can comprise an upstream connector for detachably connecting to the inlet connector of a filter module according to the invention; and a downstream connector for detachably connecting to the outlet connector of the filter module.

The "interruption means" is to be understood as a means for opening the cooling fluid path, preferably without any significant loss of cooling fluid. For example, the interruption means may comprises one or two valves for temporarily shutting off the cooling fluid flow before opening the fluid path to form a gap for accommodating the filter module. The upstream and downstream connectors can be any kind of threaded connectors, flange connectors, etc., suitable for making a quick and watertight connection to the inlet and outlet connectors of the filter module.

An advantage of the wind turbine according to the invention is that a flushing procedure can conveniently be carried out at any time, since the interruption means allows the temporary insertion of a filter module according to the invention. This can be used to flush the cooling fluid of essentially all dirt particles that might otherwise pose a threat to components of the cooling arrangement such as the converter, cooler, pump, valves, bleed nipples, excess pressure valves, etc.

According to the invention, the method of performing a flushing procedure on the cooling arrangement of a wind turbine comprises the steps of connecting such a filter module into a fluid path of the cooling arrangement such that the inlet connector of the filter module is connected to an upstream part of the cooling arrangement and the outlet connector is connected to a downstream part of the cooling arrangement; operating the cooling arrangement for a predefined duration to flush cooling fluid through the fluid path and through the filter mesh insert of the filter module; and disconnecting the filter module from the fluid path of the cooling arrangement.

An advantage of the method according to the invention is that the flushing procedure can be carried out with a filter module that is specifically realized to filter out a large range of particle sizes, without interfering with the usual operation of the cooling arrangement. As mentioned above, the cooling fluid of a wind turbine's cooling arrangement must be pumped or circulated with a relatively high flow rate to achieve a high level of efficiency during operation of the wind turbine. A filter with a fine mesh could not be used during operation of the wind turbine, since the ensuing reduction in rate of flow would have a detrimental effect on the efficiency of the cooling, and critical regions of the wind turbine might overheat as a result.

According to the invention, the method of performing a flushing procedure on the cooling arrangements of a plurality of wind turbines, using such a filter module, comprises the steps of:
(A) conveying the filter module to a wind turbine;
(B) performing a filter flushing procedure according to the invention on the cooling arrangement of that wind turbine;
(C) removing the filter mesh from the filter module after completion of the flushing procedure on that wind turbine;
(D) inserting a clean filter mesh insert into the filter module;
(E) transferring the filter module to a further wind turbine; wherein steps (A) to (E) are carried out for each of the plurality of wind turbines.

An advantage of the method according to the invention is that the cooling arrangements of several or all of the wind turbines of a wind park can effectively and thoroughly be subject to a flushing procedure using only a small number of filter modules, perhaps even only one filter module. It is not necessary to install a filter module permanently into the cooling fluid path of any of the wind turbines, so that considerably expense can be saved.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that a cooling arrangement is realised for cooling a large electrical machine such as a generator, for example a wind turbine generator. Furthermore, again without restricting the invention in any way, it may be assumed that the cooling fluid is water, or mainly water. For example, a cooling fluid may comprise mostly water and may have one or more additives such as a quantity of coolant to augment the cooling effect during very hot conditions, and/or a quantity of antifreeze to prevent the water from freezing during very cold conditions.

The effect on the flow rate of a filter inserted into the fluid path of a cooling system should be kept to a minimum, so that the flow rate of the cooling fluid is not significantly slowed during a flushing procedure. Therefore, in a particularly preferred embodiment of the invention, the surface area of the filter mesh insert is preferably several times larger that the outlet area of the filter mesh insert. Here, the term "outlet area" refers to the area at the base of the filter mesh insert, i.e. the downstream opening. Preferably, the ratio of surface area to the outlet area for a filter mesh insert comprises at least 6:1, more preferably at least 8:1, most preferably at least 10:1. It has been found in the course of testing a filter module according to the invention that a surface area to outlet area ratio of 10:1 resulted in a very favourably minimal impact on the flow rate of the cooling fluid.

The flow rate can also be further optimised by dimensioning the filter module and filter mesh insert so that the outlet area of the filter mesh insert is significantly larger than the cross-sectional area of a hose to which the filter module is to be connected. This difference in area can compensate for any drop in flow rate across the filter mesh, so that hardly any pressure loss occurs, so that the filter module has only a very favourably minor impact on the flow rate of the cooling fluid.

As indicated above, it is advantageous to maintain a favourably high flow rate within the cooling arrangement. For this reason, the permanent filter elements used in the prior art realisations are generally quite coarse, with relatively large holes, in an attempt to reduce the pressure loss caused by such a filter element. However, as already indicated, a coarse filter can only trap large dirt particles. Finer particles remain in the cooling fluid and can cause damage in various parts of the cooling arrangement. Therefore, the filter mesh insert has an essentially conical form, for example a conical or pyramidal form, and the base of the filter mesh insert is arranged at the downstream end of the filter module and the apex of the filter mesh insert is arranged towards the upstream end of the filter module. This preferred realisation has several advantages. For example, the relatively large surface area allows for a very large number of fine openings or holes in the filter mesh. Furthermore, by arranging a cone-shaped or pyramid-shaped mesh insert to point upstream, it offers relatively little resistance to the fluid flow. Any associated drop in pressure can therefore be minimized. Also, because of its shape, the cooling fluid flows essentially "alongside" the filter mesh insert. The fluid itself is easily compelled to pass through the holes in the filter mesh, while any particles borne in the cooling fluid are simply carried further along, until they collect at the base of the filter mesh insert at the downstream end of the filter module.

Such a cone-shaped filter mesh insert can be formed relatively easily from a single piece of mesh. In a preferred embodiment of the invention, the filter mesh insert is formed as a truncated cone, with a "flattened" front face arranged to face into the upstream end. The upstream front face is also preferably made of the mesh material. In this preferred embodiment of the invention, the ratio of the total surface area of the filter mesh insert to the area of its downstream opening is preferably in the order of 10:1, while the ratio of its length to its base diameter is preferably about 3:1. The dimensions of the conical filter can be chosen to optimise the fluid flow alongside and through the holes of the filter mesh. For example, as indicated above, the downstream opening of the filter mesh insert (and the downstream end of the filter module) can be dimensioned to be greater that the cross-sectional area of the hose to which the filter module is to be attached, and the surface area of the filter mesh insert can be significantly greater than the cross-sectional area of the hose. The difference in diameter between filter module and hose can by dealt with by suitable adapter elements arranged at either end of the filter module, for example an upstream flange and a downstream flange, each shaped to accommodate the hose of a cooling arrangement.

The outer housing can have any suitable form. For example, the outer housing can have a form to match the shape of a filter mesh insert. Similarly, the outer housing can have a U-shape if it is required to connect it between two parallel cooling conduits or pipes. Alternatively, the inlet and outlet connectors can be arranged to extend perpendicularly outward from the outer housing. However, in a preferred embodiment of the invention, the outer housing is formed as a cylinder, and wherein the inlet and outlet connectors are arranged at opposite ends of the cylinder. Such a realisation is straightforward to manufacture and can be inserted easily into most kinds of cooling conduit such as a hose or pipe with a corresponding interruption means for connecting to the filter module in a detachable and temporary manner.

Any suitable material may be used for the filter mesh insert. For example, it is possible to make filter mesh using nylon or another synthetic material. However, the lack of stiffness of nylon may adversely effect the performance of a filter module. Furthermore, it may be difficult to ensure that a conical filter mesh of nylon is not crushed or dented by the differential pressure inside the filter module. Therefore, in a particularly preferred embodiment of the invention, the filter mesh insert is made of stainless steel mesh. It is relatively easy to manufacture a stainless steel mesh, and it is also relatively easy to form the mesh into the desired shape. Furthermore, even though stainless steel mesh is quite flexible, once it is folded into a conical shape, the cone will have a favourably high degree of stiffness.

To favourably extract as much dirt and debris from the cooling fluid while maintaining a sufficient rate of flow, the openings in the filter mesh insert preferably have a width or diameter of at most 400 µm, more preferably at most 200 µm, most preferably at most 100 µm. The density of the openings per unit area is preferably chosen according to the pressure that must be withstood by the filter mesh insert. The mesh material can be made of a woven wire. For example, a filter mesh insert formed into an essentially conical shape, for example a truncated cone, and can be made from a Market Grade stainless steel mesh with openings of about 100 µm, has been observed to satisfy the requirements of low pressure loss and high flow rate in the cooling circuit.

Preferably, the wire used to form the mesh is round, i.e. with a smooth outer surface, so that the filter mesh insert can easily be cleaned of any dirt that might accumulate on it during a flushing procedure.

The housing of the filter module can be formed of any suitable material. In a particularly preferred embodiment of the invention, however, the housing comprises a transparent housing wall, preferably of clear glass or plastic or a transparent thermoplastic ("acrylic glass"). This has the advantage of allowing a technician to observe the progress of a flushing procedure, since any dirt or debris separated from the cooling fluid will collect between the filter mesh insert and the transparent wall and can be seen clearly. It is then easy to determine when the filter needs to be cleaned or replaced.

As mentioned above, the filter module according to the invention comprises a non-return or "one-way" valve so that the cooling fluid can only pass through the filter module in a predefined direction. The non-return valve can be arranged at any convenient point in the filter module. In a preferred embodiment of the invention, the non-return valve is arranged in the inlet connector of the filter module. In this way, even if the filter module should be erroneously installed the wrong way around, it is easy to detect this, since it can be observed through the glass that there is no fluid flow, and it is easy to see that the non-return valve remains closed.

In a preferred embodiment of the invention, the filter module is dimensioned to be portable from one usage site to another usage site. For example, the filter module can have a size and shape that permits it to be carried with relative ease into and out of the nacelle of a wind turbine. For added convenience, the filter module may be equipped with a carrying handle, for example a handle mounted to the outer housing.

The flushing procedure can be allowed to run for a set length of time, for example 15 minutes, 30 minutes etc. For example, knowing the capacity of a cooling path, the volume of cooling fluid can be computed, so that it is relatively easy to determine how long it would take for a flushing procedure to complete.

The filter module according to the invention can be inserted into the cooling path of the cooling arrangement at any convenient location. However, in a preferred arrangement, the filter module is connected into the fluid path between a pump of the cooling arrangement and a converter of a cooling arrangement. This arrangement has the advantage that the debris or dirt is collected as soon as possible after leaving the pump, thereby reducing the likelihood that dirt particles can become lodged in some component of the cooling arrangement. Since a component such as a converter is sensitive to dirt particles in the cooling fluid, such a filter position - in which the filter precedes the converter in the fluid flow path - can advantageously serve to protect the converter from damage due to dirt particle build-up. This arrangement is particularly well suited to cooling circuit designs in which the converter is mounted "downstream" of the pump.

Preferably, a flushing procedure is performed prior to putting the wind turbine into operation, so that any dirt or debris that has been introduced into the cooling arrangement during its assembly can be removed before the wind turbine is put into operation. Equally, the flushing procedure may be carried out in the course of a maintenance procedure on the wind turbine, for example after renewal or topping up of the cooling fluid, after replacing any part of the cooling arrangement, etc.

Of course, depending on the operation and/or maintenance history of a wind turbine, and/or on the size of its cooling arrangement, the amount of debris or dirt in the cooling fluid may be considerable. Therefore, in a further preferred embodiment of the invention, the method of performing the flushing procedure preferably comprises the steps of removing a clogged filter mesh insert from the filter module during the flushing procedure of a wind turbine and inserting a clean filter mesh insert into the filter module before resuming the flushing procedure for that wind turbine. A clean replacement filter mesh insert may be used, or the clogged or dirty filter mesh insert may be rinsed under water to wash away the dirt before re-inserting the mesh insert into the housing of the filter module.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a filter module according to a first embodiment of the invention;
Fig. 2 shows the filter module of Fig. 1;
Fig. 3 shows the filter module of Figs. 1 and 2 arranged in a cooling circuit of a wind turbine according to an embodiment of the invention;
Fig. 4 is a schematic representation of a wind park with a plurality of wind turbines according to an embodiment of the invention.

In the diagrams, like numbers refer to like objects throughout. Objects in the diagrams are not necessarily drawn to scale.

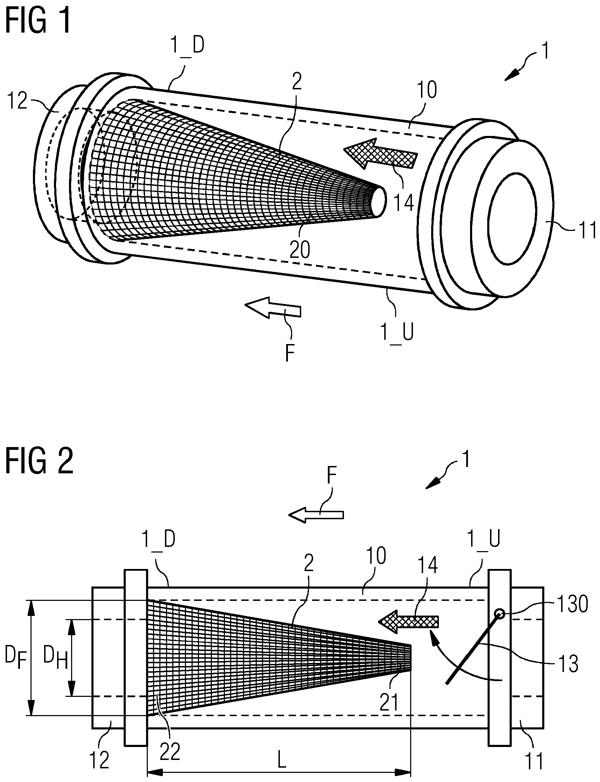

Figs. 1 and 2 show a filter module 1 according to an embodiment of the invention. The filter module 1 has an outer housing 10 shaped to receive a filter mesh insert 2 with many small mesh openings 20 or holes 20 realised to separate even very fine dirt particles from a cooling fluid of a cooling arrangement. The openings 20 in this embodiment may be assumed to be approximately 100 µm (micrometres), and the mesh may comprise a Market Grade, Mill Grade, or other suitable mesh grade material. The filter module 1 can be temporarily, i.e. detachably connected into a cooling circuit by means of an inlet connector 11 for connecting to an upstream part of the cooling arrangement and an outlet connector 12 for connecting to a downstream part of the cooling arrangement. These connectors 11, 12 can comprise any suitable adaptive elements such as flanges, clamps, seals etc., as will be known to the skilled person.

As shown more clearly in Fig. 2, the filter module 1 also has a non-return valve 13 realised to define a fluid flow direction F from an upstream end 1_U of the filter module 1 to a downstream end 1_D of the filter module 1. The non-return or one-way valve 13 can pivot only inwards into the filter module 1 and in the downstream direction, but not outward into the upstream direction. For example, in the case of a cylindrical filter module, this can be achieved by using a circular disc 13 with a diameter slightly larger than the diameter of an opening of the upstream connector 11. A pivot hinge 130 is used for a smooth motion of the one-way valve when cooling fluid is to pass into the filter module 1. In this embodiment, the filter mesh insert 2 has an essentially conical shape, with its apex or flattened front face directed toward the upstream end 1_U of the filter module 1 (corresponding to the upstream part of the cooling arrangement when the filter module 1 is correctly installed).

The dimensions of the filter mesh insert 2 are chosen to ensure that it causes only a minimum or negligible pressure loss. For example, favourable dimensions for a conical filter element can comprise a length L of 270 mm, a base diameter D_{F} of 85 mm, with a front face diameter of 45 mm, i.e. the diameter of the flattened front face is 45 mm in this example. These dimensions can be chosen for the filter mesh insert of a filter module that is to be connected between hoses with a diameter D_{H} of 50 mm. Connectors 11, 12 are shaped to bridge the differences in diameter. In this case, the ratio of total surface area of the filter mesh insert 2 to the area of the filter mesh base is about 10:1; while the ratio of total surface area of the filter mesh insert to hose cross-sectional area is about 30:1. These dimensions ensure a minimal impact on the flow rate of the cooling fluid.

To ensure that the filter module 1 is correctly inserted into a cooling circuit, a flow direction marker 14 can be attached onto the housing, or etched onto a surface of the housing. Particularly in cases where the cooling fluid is opaque, so that it would not immediately be obvious if the filter module were the wrong way around in the cooling circuit, the flow direction marker can assist a technician to mount it correctly.

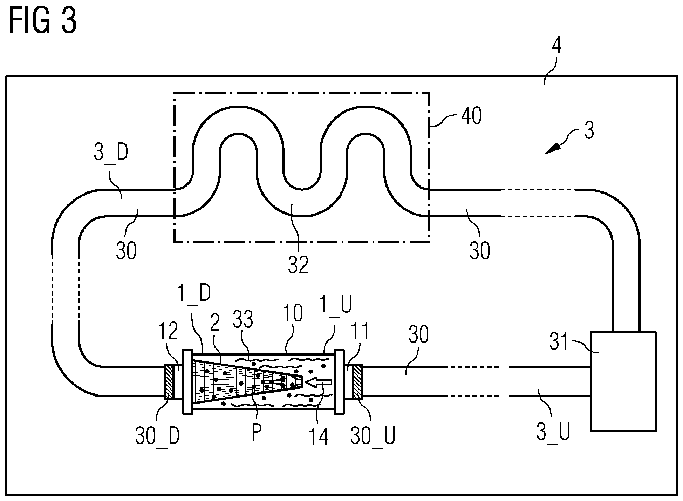

Fig. 3 shows the filter module of Fig. 1 arranged in a cooling circuit 30 of a cooling arrangement 3 of a wind turbine 4 according to an embodiment of the invention. The wind turbine 4 is only indicated in an abstract manner. The cooling arrangement 3 is used to cool one or modules of the wind turbine 4, indicated collectively as a module 40. Of course, the cooling circuit 30 of the cooling arrangement 3 can pass through or over any number of separate modules, units or components. A cooling circuit 30 can also be formed to cover a larger area, for example as a cooling circuit portion 32 in a heat exchanger of the cooling arrangement 3. To flush the entire cooling arrangement 3, the filter module 1 according to the invention can be inserted into the cooling circuit 30 at any appropriate point. Here, the cooling arrangement 3 has a cooling circuit 30 that can be interrupted or opened between an upstream end 30_U and a downstream end 30_D. In this embodiment, the filter module 1 has been mounted close to a pump 31, so that an upstream connector 30_U of the cooling circuit 30 is connected to the upstream connector 11 of the filter module 1. Similarly, the downstream connector 12 of the filter module 1 is connected to a downstream connector 30_D of the cooling circuit 30. To flush the system 3, the pump 31 is activated to pump a cooling fluid 33 through the cooling circuit 30 and through the filter module 1. Any dirt particles P larger than the holes of the filter mesh insert 2 will remain in the filter module 1. Since the holes are preferably do not exceed 100 µm, the filter module 1 very effectively separates the dirt P from the cooling fluid 33. Owing to the long conical shape of the filter mesh insert 2, the cooling fluid 33 can easily pass through the mesh insert 2, and a reasonable amount of dirt P will not clog the filter mesh insert 2. The progress of the flushing procedure can be observed through the transparent housing 10. A technician can then remove the filter module 1, re-connect the two connectors 30_U, 30_D to close the cooling circuit 30 again, and clean the filter mesh insert 2. In the event that the cooling fluid 33 is very dirty, the technician can remove the filter module 1, clean the filter mesh insert 2, replace it, re-connect the filter module 1, and repeat the flushing procedure. Of course, the pump 31 may be turned off while mounting the filter module 1.

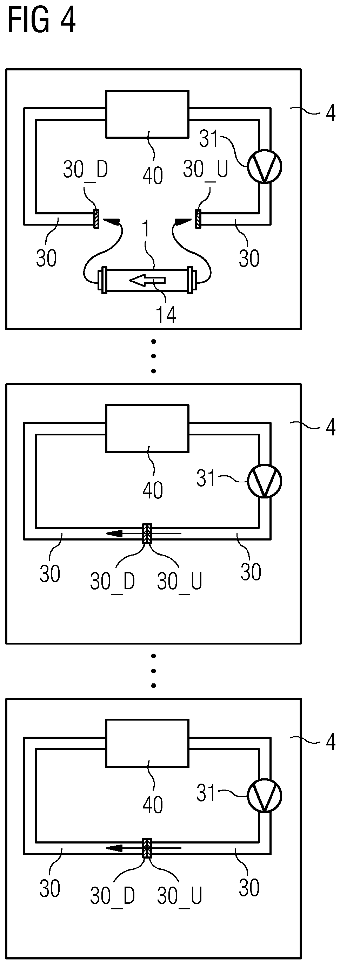

Fig. 4 is a schematic representation of a wind park with a plurality of wind turbines 4 according to an embodiment of the invention, again these are shown in an abstract manner. The wind turbines 4 each have a cooling arrangement 3 with a cooling circuit 30 that can be interrupted (as shown in the upper part of the diagram) to receive a filter module 1 according to the invention. Once a flushing procedure has been completed for a first wind turbine 4, the filter module 1 can be removed and the upstream and downstream connectors 30_U, 30_D of the cooling circuit 30 are closed to allow the cleaned cooling fluid to be pumped through the cooling arrangement 3 when the turbine 4 is operational. The removed filter module 1 can then be used in any of the other wind turbines, as required. Since the pressure loss of a filter module 1 according to the invention is very low, i.e. the filter module 1 does not significantly reduce the rate of fluid flow through the cooling circuit, a filter module 1 can be conveniently "parked" in the cooling circuit 30 of one of the wind turbines 4 of the wind park, effectively as part of the cooling circuit 30, so that it is always available for use in that wind park. It can be retrieved by a technician as required.

Although the present invention has been disclosed in the form of preferred embodiments and variations thereon, it will be understood that numerous additional modifications and variations could be made thereto without departing from the scope of the invention. For example, although the filter module has been described as a portable device in the above, it is clear that the filter module could be more or less permanently installed in the cooling circuit of a wind turbine or similar large machine. For example, one filter module could be "parked" in the cooling circuit of a wind turbine of a wind park. If the filter module is required for flushing the cooling system of another wind turbine, it can relatively easily be removed from its "parked" position and used in the other wind turbine.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A filter module (1) realised for temporary insertion into a cooling fluid path (30) of a cooling arrangement (3) of a wind turbine (4) during a flushing procedure of the cooling arrangement (3), which filter module (1) comprises
- an inlet connector (11) for detachably connecting to an upstream part (3_U) of the cooling arrangement (3) and an outlet connector (12) for detachably connecting to a downstream part (3_D) of the cooling arrangement (3);
- a non-return valve (13) realised to define a fluid flow direction (F) from an upstream end (1_U) of the filter module (1) to a downstream end (1_D) of the filter module (1); and
- an outer housing (10) formed to receive a filter mesh insert (2), which filter mesh insert (2) has an essentially conical form and comprises a plurality of mesh openings (20) realised to separate particles (P) from the cooling fluid (33), and wherein the base (22) of the filter mesh insert (2) is arranged at the downstream end (1_D) of the filter module (1) and the apex (21) of the filter mesh insert (2) is arranged towards the upstream end (1_U) of the filter module (1).

2. A filter module according to claim 1, wherein the ratio of surface area of the filter mesh insert (2) to a cross-sectional area of the base (22) of the filter mesh insert (2) comprises at least 6:1, more preferably at least 8:1, most preferably at least 10:1.

3. A filter module according to any one of the preceding claims, wherein the filter mesh insert (2) comprises a stainless steel mesh (2).

4. A filter module according to any one of the preceding claims, wherein the size of a mesh opening (20) is preferably at most 400 µm, more preferably at most 200 µm, most preferably at most 100 µm.

5. A filter module according to any one of the preceding claims, wherein the non-return valve (13) is arranged in the inlet connector (11) of the filter module (1).

6. A filter module according to any one of the preceding claims, wherein the outer housing (10) comprises a transparent material, preferably transparent glass, transparent plastic or transparent thermoplastic.

7. A filter module according to any one of the preceding claims, wherein the outer housing (10) is formed as a cylinder (10), and wherein the inlet and outlet connectors (11, 12) are arranged at opposite ends of the cylinder (10).

8. A method of performing a flushing procedure on the cooling arrangement (3) of a wind turbine (4), which method comprises
- connecting a filter module (1) according to any of claims 1 to 7 into a fluid path (30) of the cooling arrangement (3) such that the inlet connector (11) of the filter module (1) is connected to an upstream part of the cooling arrangement (3) and the outlet connector (12) is connected to a downstream part of the cooling arrangement (3);
- operating the cooling arrangement (3) for a predefined duration to flush cooling fluid through the fluid path (30) and through the filter mesh insert (2) of the filter module (1);
- disconnecting the filter module (1) from the fluid path (30) of the cooling arrangement (3).

9. A method according to claim 8, comprising the steps of monitoring the flushing procedure through the transparent housing (10) of the filter module (1) and terminating the flushing procedure after a particle build-up limit has been determined.

10. A method according to claim 8 or claim 9, wherein the step of connecting the filter module (1) into the fluid path (30) comprises connecting the filter module (1) between a pump (31) and a converter of the cooling arrangement (3).

11. A method according to any one of claims 8 to 10, wherein a flushing procedure is performed prior to putting the wind turbine (4) into operation and/or in the course of a maintenance procedure on the wind turbine (4).

12. A method of using a filter module (1) according to any of claims 1 to 7 to perform a flushing procedure on the cooling arrangements (3) of a plurality of wind turbines (4), which method comprises
(A) conveying the filter module (1) to a wind turbine (4);
(B) performing a filter flushing procedure according to any of claims 8 to 11 on the cooling arrangement (3) of that wind turbine (4);
(C) removing the filter mesh (2) from the filter module (1) after completion of the flushing procedure on that wind turbine (4);
(D) inserting a clean filter mesh insert (2) into the filter module (1);
(E) transferring the filter module (1) to a further wind turbine (4);
wherein steps (A) to (E) are carried out for each of the plurality of wind turbines (4).

13. A method according to claim 12, comprising the steps of
- removing a clogged filter mesh insert (2) from the filter module (1) during the flushing procedure of a wind turbine (4);
- inserting a clean filter mesh insert (2) into the filter module (1); and
- resuming the flushing procedure for that wind turbine (4).

## Patentansprüche

1. Filtermodul (1), welches für das vorübergehende Einsetzen in einen Kühlfluidweg (30) einer Kühlanordnung (3) einer Windturbine (4) während eines Spülvorgangs der Kühlanordnung (3) ausgelegt ist, wobei dieses Filtermodul (1) umfasst:
- ein Einlassverbindungsstück (11) zum lösbaren Verbinden mit einem stromaufwärtigen Teil (3_U) der Kühlanordnung (3) und ein Auslassverbindungsstück (12) zum lösbaren Verbinden mit einem stromabwärtigen Teil (3_D) der Kühlanordnung (3);
- ein Rückschlagventil (13), das dafür ausgelegt ist, eine Fluidströmungsrichtung (F) von einem stromaufwärtigen Ende (1_U) des Filtermoduls (1) zu einem stromabwärtigen Ende (1_D) des Filtermoduls (1) zu definieren; und
- ein äußeres Gehäuse (10), das dafür ausgebildet ist, einen Filtersiebeinsatz (2) aufzunehmen, wobei dieser Filtersiebeinsatz (2) eine im Wesentlichen konische Form aufweist und eine Vielzahl von Sieböffnungen (20) umfasst, die dafür ausgelegt sind, Partikel (P) aus dem Kühlfluid (33) zu entfernen, und wobei der Fuß (22) des Filtersiebeinsatzes (2) am stromabwärtigen Ende (1_D) des Filtermoduls (1) angeordnet ist und der Scheitel (21) des Filtersiebeinsatzes (2) in Richtung des stromaufwärtigen Endes (1_U) des Filtermoduls (1) angeordnet ist.

2. Filtermodul nach Anspruch 1, wobei das Verhältnis der Oberflächengröße des Filtersiebeinsatzes (2) zu einer Querschnittsfläche des Fußes (22) des Filtersiebeinsatzes (2) wenigstens 6:1, stärker bevorzugt wenigstens 8:1, am stärksten bevorzugt wenigstens 10:1 beträgt.

3. Filtermodul nach einem der vorhergehenden Ansprüche, wobei der Filtersiebeinsatz (2) ein Sieb aus nichtrostendem Stahl (2) umfasst.

4. Filtermodul nach einem der vorhergehenden Ansprüche, wobei die Größe einer Sieböffnung (20) vorzugsweise höchstens 400 µm, stärker bevorzugt höchstens 200 µm, am stärksten bevorzugt höchstens 100 µm beträgt.

5. Filtermodul nach einem der vorhergehenden Ansprüche, wobei das Rückschlagventil (13) in dem Einlassverbindungsstück (11) des Filtermoduls (1) angeordnet ist.

6. Filtermodul nach einem der vorhergehenden Ansprüche, wobei das äußere Gehäuse (10) ein durchsichtiges Material umfasst, vorzugsweise durchsichtiges Glas, durchsichtigen Kunststoff oder durchsichtigen Thermoplast.

7. Filtermodul nach einem der vorhergehenden Ansprüche, wobei das äußere Gehäuse (10) als ein Zylinder (10) ausgebildet ist und wobei das Einlass- und das Auslassverbindungsstück (11, 12) an entgegengesetzten Endes des Zylinders (10) angeordnet sind.

8. Verfahren zum Durchführen eines Spülvorgangs an der Kühlanordnung (3) einer Windturbine (4), wobei das Verfahren umfasst:
- Einbinden eines Filtermoduls (1) nach einem der Ansprüche 1 bis 7 in einen Fluidweg (30) der Kühlanordnung (3), so dass das Einlassverbindungsstück (11) des Filtermoduls (1) mit einem stromaufwärtigen Teil der Kühlanordnung (3) verbunden ist und das Auslassverbindungsstück (12) mit einem stromabwärtigen Teil der Kühlanordnung (3) verbunden ist;
- Betreiben der Kühlanordnung (3) für eine vordefinierte Dauer, um den Fluidweg (30) und den Filtersiebeinsatz (2) des Filtermoduls (1) mit Kühlfluid zu spülen;
- Trennen des Filtermoduls (1) von dem Fluidweg (30) der Kühlanordnung (3).

9. Verfahren nach Anspruch 8, welches die Schritte des Überwachens des Spülvorgangs durch das durchsichtige Gehäuse (10) des Filtermoduls (1) hindurch und des Beendens des Spülvorgangs, nachdem eine Grenze der Ansammlung von Partikeln bestimmt worden ist, umfasst.

10. Verfahren nach Anspruch 8 oder Anspruch 9, wobei der Schritt des Einbindens des Filtermoduls (1) in den Fluidweg (30) das Einsetzen des Filtermoduls (1) zwischen eine Pumpe (31) und einen Wandler der Kühlanordnung (3) umfasst.

11. Verfahren nach einem der Ansprüche 8 bis 10, wobei ein Spülvorgang durchgeführt wird, bevor die Windturbine (4) in Betrieb genommen wird, und/oder im Verlaufe eines Wartungsprozesses an der Windturbine (4).

12. Verfahren zur Verwendung eines Filtermoduls (1) nach einem der Ansprüche 1 bis 7, um einen Spülvorgang an den Kühlanordnungen (3) mehrerer Windturbinen (4) durchzuführen, wobei das Verfahren umfasst:
(A) Transportieren des Filtermoduls (1) zu einer Windturbine (4) ;
(B) Durchführen eines Filterspülvorgangs gemäß einem der Ansprüche 8 bis 11 an der Kühlanordnung (3) der betreffenden Windturbine (4);
(C) Entfernen des Filtersiebes (2) aus dem Filtermodul (1) nach Beendigung des Spülvorgangs an der betreffenden Windturbine (4);
(D) Einsetzen eines sauberen Filtersiebeinsatzes (2) in das Filtermodul (1);
(E) Weitertransportieren des Filtermoduls (1) zu einer weiteren Windturbine (4);
wobei die Schritte (A) bis (E) für jede der mehreren Windturbinen (4) ausgeführt werden.

13. Verfahren nach Anspruch 12, welches die folgenden Schritte umfasst:
- Entfernen eines zugesetzten Filtersiebeinsatzes (2) aus dem Filtermodul (1) während des Spülvorgangs einer Windturbine (4);
- Einsetzen eines sauberen Filtersiebeinsatzes (2) in das Filtermodul (1); und
- Fortsetzen des Spülvorgangs für die betreffende Windturbine (4).

## Revendications

1. Module de filtre (1) réalisé pour une insertion temporaire dans un trajet de fluide de refroidissement (30) d'un agencement de refroidissement (3) d'une turbine éolienne (4) pendant une procédure de rinçage de l'agencement de refroidissement (3), lequel module de filtre (1) comprend :
- un connecteur d'entrée (11) permettant de se connecter de manière amovible à une partie en amont (3_U) de l'agencement de refroidissement (3) et un connecteur de sortie (12) permettant de se connecter de manière amovible à une partie en aval (3_D) de l'agencement de refroidissement (3);
- un clapet anti-retour (13) réalisé pour définir un sens d'écoulement du fluide (F) d'une extrémité en amont (1_U) du module de filtre (1) à une extrémité en aval (1_D) du module de filtre (1) ; et
- un boîtier extérieur (10) formé pour recevoir un insert de maille de filtre (2), lequel insert de maille de filtre (2) présente une forme sensiblement conique et comprend une pluralité d'ouvertures de maille (20) réalisées pour séparer des particules (P) provenant du fluide de refroidissement (33), et dans lequel la base (22) de l'insert de maille de filtre (2) est agencée au niveau de l'extrémité en aval (1_D) du module de filtre (1) et le sommet (21) de l'insert de maille de filtre (2) est agencé vers l'extrémité en amont (1_U) du module de filtre (1).

2. Module de filtre selon la revendication 1, dans lequel le rapport d'une zone de surface de l'insert de maille de filtre (2) par rapport à une zone de section transversale de la base (22) de l'insert de maille de filtre (2) comprend au moins 6 :1, de façon plus préférée au moins 8 :1, de manière préférée entre toutes au moins 10 :1.

3. Module de filtre selon l'une quelconque des revendications précédentes, dans lequel l'insert de maille de filtre (2) comprend une maille en acier inoxydable (2).

4. Module de filtre selon l'une quelconque des revendications précédentes, dans lequel la taille d'une ouverture de maille (20) est de préférence au plus de 400 µm, de façon plus préférée au plus de 200 µm, de manière préférée entre toutes au plus de 100 µm.

5. Module de filtre selon l'une quelconque des revendications précédentes, dans lequel le clapet anti retour (13) est agencé dans le connecteur d'entrée (11) du module de filtre (1).

6. Module de filtre selon l'une quelconque des revendications précédentes, dans lequel le boîtier extérieur (10) comprend un matériau transparent, de manière préférée du verre transparent, du plastique transparent ou du thermoplastique transparent.

7. Module de filtre selon l'une quelconque des revendications précédentes, dans lequel le boîtier extérieur (10) est formé comme un cylindre (10), et dans lequel les connecteurs d'entrée et de sortie (11, 12) sont agencés à des extrémités opposées du cylindre (10).

8. Procédé d'exécution d'une procédure de rinçage sur l'agencement de refroidissement (3) d'une turbine éolienne (4), ce procédé comprend les étapes consistant à :
- se connecter à un module de filtre (1) selon l'une quelconque des revendications 1 à 7 dans un écoulement de fluide (30) de l'agencement de refroidissement (3) de sorte que le connecteur d'entrée (11) du module de filtre (1) est connecté à une partie en amont de l'agencement de refroidissement (3) et que le connecteur de sortie (12) est connecté à une partie en aval de l'agencement de refroidissement (3);
- utiliser l'agencement de refroidissement (3) pendant une durée prédéfinie pour rincer le fluide de refroidissement à travers l'écoulement de fluide (30) et à travers l'insert de maille de filtre (2) du module de filtre (1);
- déconnecter le module de filtre (1) de l'écoulement de fluide (30) de l'agencement de refroidissement (3).

9. Procédé selon la revendication 8, comprenant les étapes consistant à surveiller la procédure de rinçage à travers le boîtier transparent (10) du module de filtre (1), et à terminer la procédure de rinçage après qu'une limite de construction de particules a été déterminée.

10. Procédé selon la revendication 8 ou la revendication 9, dans lequel l'étape de connexion au module de filtre (1) dans l'écoulement de fluide (30) comprend une connexion au module de filtre (1) entre une pompe (31) et un convertisseur de l'agencement de refroidissement (3).

11. Procédé selon l'une quelconque des revendications 8 à 10, dans lequel une procédure de rinçage est exécutée avant de mettre en fonctionnement la turbine éolienne (4) et/ou au cours d'une procédure de maintenance sur la turbine éolienne (4).

12. Procédé d'utilisation d'un module de filtre (1) selon l'une quelconque des revendications 1 à 7 permettant d'exécuter une procédure de rinçage sur les agencements de refroidissement (3) d'une pluralité de turbines éoliennes (4), lequel procédé comprend les étapes consistant à :
(A) acheminer le module de filtre (1) à une turbine éolienne (4) ;
(B) exécuter une procédure de rinçage de filtre selon l'une quelconque des revendications 8 à 11 sur l'agencement de refroidissement (3) de cette turbine éolienne (4) ;
(C) supprimer la maille de filtre (2) du module de filtre (1) après l'exécution de la procédure de rinçage sur cette turbine éolienne (4) ;
(D) insérer un insert de maille de filtre propre (2) dans le module de filtre (1) ;
(E) transférer le module de filtre (1) à une turbine éolienne supplémentaire (4) ;
dans lequel les étapes (A) à (E) sont mises en oeuvre pour chacune de la pluralité de turbines éoliennes (4).

13. Procédé selon la revendication 12, comprenant les étapes consistant à :
- supprimer un insert de maille de filtre obstrué (2) du module de filtre (1) pendant la procédure de rinçage d'une turbine éolienne (4) ;
- insérer un insert de maille de filtre propre (2) dans le module de filtre (1) ; et
- reprendre la procédure de rinçage pour cette turbine éolienne (4).
